(19) **Europäisches Patentamt**

**European Patent Office**

**Office européen des brevets**

(11) **EP 1 209 622 B1**

(12) **EUROPÄISCHE PATENTSCHRIFT**

(45) Veröffentlichungstag und Bekanntmachung des Hinweises auf die Patenterteilung:
**19.07.2006 Patentblatt 2006/29**

(51) Int Cl.:
*G06T 7/00* *(2006.01)*

(21) Anmeldenummer: **01125991.8**

(22) Anmeldetag: **31.10.2001**

(54) **Verfahren und Vorrichtung zur Registrierung von Bildern**

Method and device for registering images

Méthode et dispositif pour recaler des images

(84) Benannte Vertragsstaaten:
**DE FR GB NL**

(30) Priorität: **04.11.2000 DE 10054814**

(43) Veröffentlichungstag der Anmeldung:
**29.05.2002 Patentblatt 2002/22**

(73) Patentinhaber:
• **Philips Intellectual Property & Standards GmbH**
  **20099 Hamburg (DE)**
  Benannte Vertragsstaaten:
  **DE**
• **Koninklijke Philips Electronics N.V.**
  **5621 BA Eindhoven (NL)**
  Benannte Vertragsstaaten:
  **FR GB NL**

(72) Erfinder:
• **Weese, Jürgen, Dr.**
  **52064 Aachen (DE)**
• **Netsch, Thomas, Dr.**
  **52064 Aachen (DE)**

(74) Vertreter: **Volmer, Georg et al**
**Philips Intellectual Property & Standards GmbH,**
**Postfach 50 04 42**
**52088 Aachen (DE)**

(56) Entgegenhaltungen:
• LIANG Z-P ET AL: "Automated registration of multimodality images by maximization of a region similarity measure" IMAGE PROCESSING, 1997. PROCEEDINGS., INTERNATIONAL CONFERENCE ON SANTA BARBARA, CA, USA 26-29 OCT. 1997, LOS ALAMITOS, CA, USA,IEEE COMPUT. SOC, US, 26. Oktober 1997 (1997-10-26), Seiten 272-275, XP010253791 ISBN: 0-8186-8183-7
• ROCHE A ET AL: "TOWARDS A BETTER COMPREHENSION OF SIMILARITY MEASURES USED IN MEDICAL IMAGE REGISTRATION" MEDICAL IMAGE COMPUTING AND COMPUTER-ASSISTED INTERVENTION. MICCAI. INTERNATIONAL CONFERENCE. PROCEEDINGS, XX, XX, 19. September 1999 (1999-09-19), Seiten 555-556, XP008016584
• SUN Z ET AL: "TRIFOCAL MOTION MODELING FOR OBJECT-BASED VIDEO COMPRESSION AND MANIPULATION" IEEE TRANSACTIONS ON CIRCUITS AND SYSTEMS FOR VIDEO TECHNOLOGY, IEEE INC. NEW YORK, US, Bd. 8, Nr. 5, 1. September 1998 (1998-09-01), Seiten 667-685, XP000779462 ISSN: 1051-8215

EP 1 209 622 B1

**Beschreibung**

Die Erfindung betrifft ein Verfahren zur Registrierung einer Serie von mindestens drei zeitlich nacheinander erfassten Bildern eines Objekts sowie eine entsprechende Vorrichtung zur Registrierung. Außerdem betrifft die Erfindung eine Vorrichtung zur zeitlich nacheinander erfolgenden Erfassung einer Serie medizinischer Bilddaten eines Untersuchungsbereichs eines Untersuchungsobjekts sowie ein Computerprogramm zur Ausführung eines solchen Verfahrens und/oder zur Steuerung einer solchen Vorrichtung.

Zur Auswertung von Bildern, die zeitlich nacheinander erfasst wurden, ist es oftmals erforderlich, in einem ersten Schritt der Bildverarbeitung, diese Bilder zu registrieren, um insbesondere unerwünschte Bewegungen, die bei der Erfassung der Bilder aufgetreten sind und das Auswertungsergebnis verfälschen würden, auszugleichen. Solche Bewegungen können sowohl Bewegungen des Objekts als auch Bewegungen der Bildaufnahmevorrichtung sein. Registrierung bedeutet dabei, dass festgestellt wird, wie die verschiedenen Bilder aufeinander abzubilden sind bzw. zusammenpassen, insbesondere welche Translationen und/oder Rotationen das Objekt oder die Bildaufnahmevorrichtung erfahren hat zwischen der Aufnahme der einzelnen Bilder, die vor der Auswertung der Bilder ausgeglichen werden müssen.

Wenn beispielsweise in zeitlichem Abstand voneinander aufgenommene Bilder des nächtlichen Sternenhimmels miteinander kombiniert oder verglichen werden sollen, um astronomische Daten zu gewinnen, ist es erforderlich, eventuelle Bewegungen der Bildaufnahmevorrichtung, also z. B. des Stativs des Fotoapparats, zunächst auszugleichen und die genaue Lagebeziehung zwischen den Bildern zu bestimmen. Ansonsten würde das Auswertungsergebnis verfälscht.

Ein weiteres Beispiel sind medizinische Bilddaten, beispielsweise der funktionalen Magnetresonanztomographie, bei der häufig etwa 100 dreidimensionale Bilder erfasst werden. Bewegungen des Kopfes des Patienten während der Bilddatenerfassung würden das Auswertungsergebnis, also das resultierende funktionale Übersichtsbild, deutlich verschlechtern. Eine Kompensation solche Bewegungen ist deshalb dabei ein zwingender Verfahrensschritt. Eine hohe Registrierungsgenauigkeit ist auch deshalb erforderlich, da bereits geringfügige Ungenauigkeiten und Interpolationsfehler Artefakte in den resultierenden funktionalen Übersichtsbildern verursachen würden.

Bei bekannten Registrierungsverfahren, wie sie beispielsweise in "Medical Image Matching - a review with classification", IEEE Eng Med. Bio. 12, (1993) 26-29 beschrieben sind, wird die Registrierung auf der Basis von Bildstrukturen, beispielsweise Grenzstrukturen oder besonderen Bildmerkmalen, oder auf der Basis von Grauwerten der Bilder vorgenommen. In jedem Fall werden immer nur zwei Bilder betrachtet und eine Abbildungsvorschrift zwischen nur zwei zu registrierenden Bildern bestimmt, die dann dazu benutzt wird, eines der beiden Bilder auf das andere zu transformieren und damit zu registrieren. Zur Bestimmung der Abbildungsvorschrift wird dabei meist ein Ähnlichkeitsmaß verwendet, das jedoch ebenfalls nur für die zwei jeweils betrachteten und zu registrierenden Bildern bestimmt wird. Eines dieser beiden Bilder repräsentiert dabei das Referenzbild, auf das das andere Bild registriert wird.

Bei einer Serie von zeitlich nacheinander erfassten Bildern werden bei den bekannten Verfahren alle Bilder somit auf ein festes Referenzbild registriert oder jedes Bild wird auf das zeitlich zuvor erfasste und bereits registrierte Bild registriert. Die verfügbare Information wird dabei jedoch nicht optimal ausgenutzt, so dass die Registrierungsgenauigkeit nicht optimal ist. So kann es vorkommen, dass ein für die Registrierung ausgewähltes Referenzbild nicht für alle zu registrierenden Bilder optimal ist, da beispielsweise Strukturen, die in manchen zu registrierenden Bildern enthalten sind, nicht in dem Referenzbild gezeigt sind. Bei der Registrierung jeweils auf das zeitlich zuvor liegende Bild können dagegen Registrierungsfehler die bei den ersten Registrierungsschritten erfolgt sind, in weitere Registrierungsschritte übernommen werden und sich anhäufen oder durch alle Registrierungsschritte hindurchziehen.

Der Erfindung liegt deshalb die Aufgabe zugrunde, ein Verfahren und eine Vorrichtung zur Registrierung einer Serie von zeitlich nacheinander erfassten Bildern eines Objekts zu schaffen, das hinsichtlich der genannten Nachteile verbessert ist, insbesondere ein optimales Registrierungsergebnis liefert und die verfügbare Information in den zu registrierenden Bildern optimal ausnutzt.

Diese Aufgabe wird erfindungsgemäß durch ein Verfahren gemäß Anspruch 1 sowie durch eine Vorrichtung gemäß Anspruch 8 gelöst.

Erfindungsgemäß wurde erkannt, dass es sinnvoll ist, bei der Registrierung von Bildern nicht nur jeweils zwei Bilder separat zu betrachten und die Abbildungsvorschrift anhand eines für nur diese zwei Bilder berechneten Ähnlichkeitsmaßes zu bestimmen, sondern bei der Bestimmung der Abbildungsvorschrift für zwei zu registrierende Bilder oder bei der Bestimmung von Abbildungsvorschriften für mehr als zwei Bilder ein Ähnlichkeitsmaß aus den Daten aller Bilder zu bestimmen und für die Beurteilung zu verwenden, ob die gerade verwendete Abbildungsvorschrift ausreichend gut gewählt ist oder nicht.

Bevorzugt erfolgt die Bestimmung der Abbildungsvorschriften iterativ, wie in Anspruch 2 vorgesehen ist. Dies bedeutet, dass in einem ersten Schritt eine oder mehrere Abbildungsvorschriften für ein oder mehrere zu registrierende Bilder gewählt werden und dass in einem zweiten Schritt das Ähnlichkeitsmaß für alle zu registrierenden - nicht nur die gerade behandelten - Bilder bestimmt wird, wobei die im ersten Schritt untersuchten Bilder mit den gewählten Abbildungsvorschriften vor der Bestimmung des Ähnlichkeitsmaßes transformiert werden. Anhand des im zweiten Schritt bestimmten Ähnlichkeitsmaßes wird dann beurteilt, ob die im ersten Schritt gewählten Abbildungsvorschriften optimal sind oder noch weiter optimiert werden müssen. Im ersten Fall werden dann ein oder mehrere weitere Bilder untersucht und wiederum die Schritte 1 und 2 durchgeführt, während im zweiten Fall wieder zu Schritt 1 zurückgekehrt wird, um für dieselben Bilder iterativ die Abbildungsvorschriften weiter zu optimieren. Als Kriterium zur Beurteilung, ob eine Abbildungsvorschrift optimal ist, kann also ein Grenzwert oder ein Extremwert für das Ähnlichkeitsmaß verwendet werden.

Vorteilhaft wird jeweils immer nur ein einziges zu registrierendes Bild untersucht und die entsprechende Abbildungsvorschrift für dieses Bild nach dem beschriebenen Verfahren optimiert. Es ist jedoch auch denkbar, gleichzeitig die Abbildungsvorschriften mehrerer Bilder oder aller Bilder zu variieren und jeweils nach jedem Variationsschritt das Ähnlichkeitsmaß zu bestimmen.

Zur Registrierung werden vorteilhaft charakteristische Strukturen oder charakteristische Bildwerte in den Bildern verwendet, wobei für jedes zu registrierende Bild unterschiedliche oder identische Charakteristika gewählt werden können.

Bevorzugt sollen durch die zu bestimmenden Abbildungsvorschriften beliebige geometrische Veränderungen des abgebildeten Objekts ausgeglichen werden, insbesondere Translationen, Rotationen, Stauchungen und Dehnungen. Es ist jedoch auch denkbar, die auszugleichenden Veränderungen beispielsweise auf Translationen zu beschränken.

In einer bevorzugten Ausgestaltung wird die Erfindung zur Registrierung einer Serie medizinischer Bilder eines Untersuchungsobjekts, insbesondere einer Serie von zwei- oder dreidimensionalen mittels einer medizinischen Bildgebungsmodalität erstellten Bildern verwendet. Die Bilder können dabei alle mittels derselben medizinischen Bildgebungsmodalität erstellt sein, beispielsweise ein zeitliche Serie von mittels der Röntgenfluoroskopie erstellter Bilder. Die Bilder können aber auch mittels unterschiedlicher Bildgebungsmodalitäten erstellt sein. Es können also auch Bilder, die mittels eines Kernspintomographen erfasst wurden, mit Bildern, die mittels einer Ultraschallanordnung erfasst wurden, registriert werden.

Besonders vorteilhaft lässt sich die Erfindung bei der funktionalen Magnetresonanztomographie benutzen, bei der zeitliche Serien von Bildern des Gehirns zum Studium von Gehirnaktivitäten bei äußeren Reizen untersucht werden. Um dabei zuverlässige Aussagen treffen zu können, ist eine sehr hohe Genauigkeit der Registrierung erforderlich, die durch die Erfindung erreicht werden kann.

Die Erfindung betrifft auch eine Vorrichtung zur Registrierung gemäß Anspruch 8, die eine Speichereinheit zur Speicherung von Bildern und einer Recheneinheit zur Bestimmung der Abbildungsvorschriften und des Ähnlichkeitsmaßes aufweist. Diese Vorrichtung kann in identischer oder ähnlicher Weise weitergebildet sein und vorteilhafte Ausgestaltungen aufweisen, wie in Bezug auf das erfindungsgemäße Verfahren ausgeführt und in den Unteransprüchen bezüglich des Verfahrens angegeben ist.

Außerdem betrifft die Erfindung auch eine Vorrichtung zur zeitlich nacheinander erfolgenden Erfassung einer Serie medizinischer Bilddaten eines Untersuchungsbereichs eines Untersuchungsobjekts, die eine erfindungsgemäße Vorrichtung zur Registrierung aufweist. Eine solche Vorrichtung kann beispielsweise ein Kernspintomograph, ein Computertomograph, eine Röntgeneinrichtung oder eine Ultraschalleinrichtung sein.

Schließlich betrifft die Erfindung auch ein Computerprogramm zur Ausführung des erfindungsgemäßen Verfahrens und/oder zur Steuerung der erfindungsgemäßen Vorrichtung zur Registrierung.

Die Erfindung wird nachfolgend anhand der Zeichnungen näher erläutert. Es zeigen:

Figur 1    ein Blockschaltbild einer ersten bekannten Ausführungsform eines Registrierungsverfahrens,

Figur 2    ein Blockschaltbild einer zweiten bekannten Ausführungsform eines Registrierungsverfahrens,

Figur 3    ein Blockschaltbild einer Ausführungsform des erfindungsgemäßen Registrierungsverfahrens und

Figur 4    ein Blockschaltbild einer erfindungsgemäßen Vorrichtung zur Bilddatenerfassung.

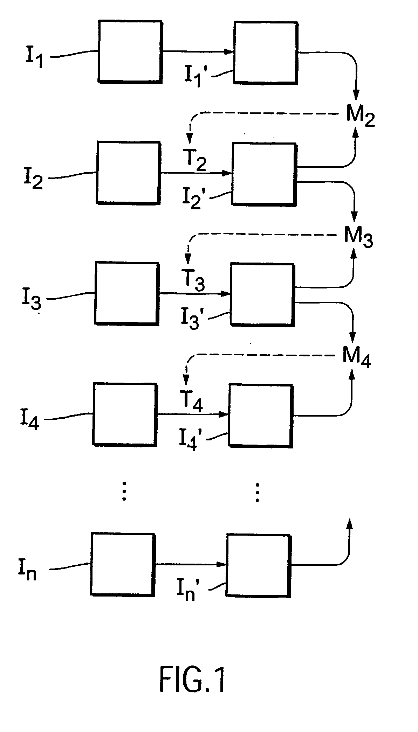

In Figur 1 ist in einem Blockschaltbild ein erstes Ausführungsbeispiel eines Registrierungsverfahrens nach dem Stand der Technik gezeigt. Darin sind exemplarisch vier Bilder $I_1$, $I_2$, $I_3$, $I_4$ einer Serie von n zeitlich nacheinander erfasster Bilder $I_1...I_n$ dargestellt, die aufeinander registriert werden sollen. Diese Bilder können beispielsweise zeitlich nacheinander erfasste zwei- oder dreidimensionale Schichtbilder des Gehirns eines Patienten sein, die mittels eines Kernspintomographen erfasst wurden, um funktionale Studien einzelner Bereiche des Gehirns bei äußeren Reizen durchzuführen. Zur Registrierung müssen Abbildungsvorschriften $T_2$, $T_3$, $T_4...T_n$ gewonnen werden, die dazu benutzt werden, die ursprünglichen Bilder $I_2$, $I_3$, $I_4...I_n$ in registrierte Bilder $I_1'$, $I_2'$, $I_3'$, $I_4'...I_n'$ zu transformieren, damit diese aufeinander registriert sind. Durch die Abbildungsvorschriften $T_2$, $T_3$, $T_4...T_n$ soll also bestimmt werden, in welchen räumlichen Lagebeziehungen die Bilder $I_1$-$I_n$ zueinander bestehen.

Bei dem gezeigten Ausführungsbeispiel werden jeweils zwei benachbarte Bilder aufeinander registriert, das heißt, es wird zunächst das Bild $I_2$ auf das Bild $I_1$ registriert, wodurch sich das registrierte Bild $I_2'$ ergibt. Danach wird das Bild $I_3$ auf das vorher registriert Bild $I_2'$ registriert, woraus sich das registrierte Bild $I_3'$ ergibt. Danach wiederum wird das Bild $I_4$ auf das registrierte Bild $I_3'$ registriert, woraus sich wiederum das registrierte Bild $I_4'$ ergibt.

Die Registrierung zweier Bilder zueinander erfolgt derart, dass für das Bild $I_2$ ein erster Versuch einer Abbildungsvorschrift $T_2$ festgelegt wird, mit dem das Bild $I_2$ in das Bild $I_2'$ transformiert wird. Dann wird zwischen dem erhaltenen Bild $I_2'$ und dem Bezugsbild $I_1'$, das hier dem Bild $I_1$ entspricht, das Ähnlichkeitsmaß M2 bestimmt, an dem sich ablesen lässt, ob die Ähnlichkeit zwischen den Bildern $I_2'$ und $I_1'$ (bzw. $I_1$) ausreichend groß ist, so dass die Abbildungsvorschrift $T_2$ nicht weiter verändert werden muss. Als Ähnlichkeitsmaß können dazu beispielsweise die Varianzen von Voxeln, also einzelner kleiner Bildpunkte oder Gruppen von Bildpunkten, in den Bildern $I_1'$ und $I_2'$ bestimmt werden. Besagt das Ähnlichkeitsmaß, dass die Ähnlichkeit noch nicht ausreichend groß ist, so wird die Abbildungsvorschrift nun schrittweise so lange weiter verändert, bis das jeweils berechnete Ähnlichkeitsmaß die Aussage ergibt, dass die Ähnlichkeit zwischen den Bildern $I_2'$ und $I_1'$ ausreichend groß ist.

Die Vorgehensweise bei der Registrierung eines Bildes auf das jeweils vorhergehende bereits registrierte Bild ist identisch zu der beschriebenen Vorgehensweise. Das heißt, über das Ähnlichkeitsmaß M3 zwischen den Bildern $I_3'$ und $I_2'$ wird die Abbildungsvorschrift $T_3$ bestimmt. Gleichermaßen wird danach mittels des Ähnlichkeitsmaßes M4 die Abbildungsvorschrift $T_4$ zwischen den Bildern $I_4'$ und $I_3'$ bestimmt. Dies erfolgt so lange, bis alle Bilder auf das jeweils vorhergehende Bild registriert sind. Nachteilig bei diesem Verfahren ist, dass jedes Bild immer nur auf das jeweils zeitlich vorhergehenden Bild registriert wird und sich somit Fehler, die in den ersten Registrierungsschritten enthalten sind, in weiteren Registrierungsschritten fortpflanzen.

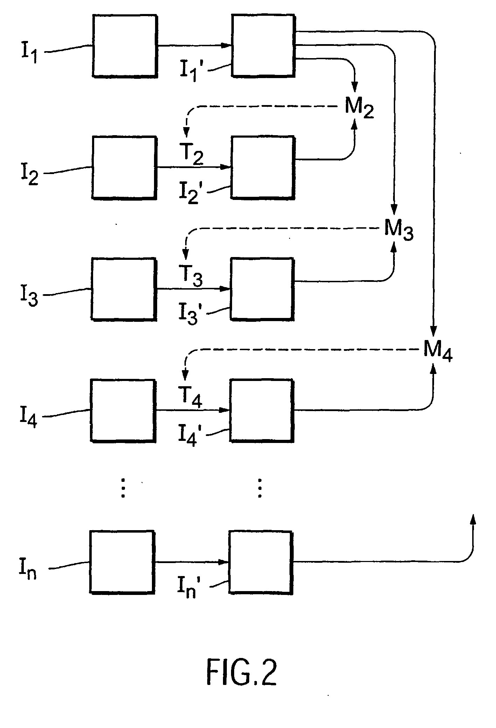

In Figur 2 ist eine zweite Ausführungsform eines Registrierungsverfahrens nach dem Stand der Technik gezeigt. Im Unterschied zu dem in Figur 1 gezeigten Ausführungsbeispiel werden hier alle zu registrierenden Bilder $I_2$, $I_3$, $I_4...I_n$ auf ein festes Referenzbild $I_1'$ registriert, das wiederum dem Bild $I_1$ entspricht. Die Abbildungsvorschrift $T_2$ wird demnach mittels des Ähnlichkeitsmaßes M2 bestimmt, das wie bei dem in Figur 1 gezeigten Ausführungsbeispiel aus den Bildern $I_2$, und $I_1$, bestimmt wird. Anders als bei der in Figur 1 gezeigten Ausführungsform werden das Ähnlichkeitsmaß M3 und das Ähnlichkeitsmaß M4 zur Bestimmung der Abbildungsvorschriften $T_3$ und $T_4$ aus dem Bild $I_3'$ dem Bezugsbild $I_1'$ bzw. $I_4'$ und $I_1'$ bestimmt.

Nachteilig bei diesem Verfahren ist allerdings, dass möglicherweise nicht alle Strukturen, die in dem Bezugsbild $I_1'$ enthalten sind und zur Registrierung verwendet werden, nicht in allen anderen Bildern enthalten sind, so dass die Registrierung mit unterschiedlichen Bezugspunkten erfolgt. Anders herum können auch Strukturen, die in einzelnen zu registrierenden Bildern $I_2$, $I_3$, $I_4...I_n$ enthalten sind und sich besonders gut für die Registrierung eignen würden, nicht in dem Bezugsbild $I_1'$ enthalten sind.

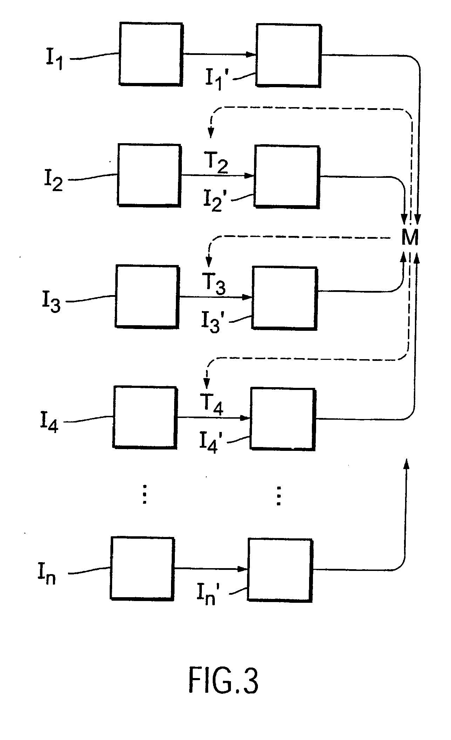

Ein Blockschaltbild einer Ausführungsform des erfindungsgemäßen Verfahrens ist in Figur 3 gezeigt. Bei diesem werden die Abbildungsvorschriften $T_2$, $T_3$, $T_4...T_n$ alle anhand desselben Ähnlichkeitsmaßes M bestimmt, das aus allen Bildern $I_1'$, $I_2'$, $I_3'$, $I_4'...I_n'$ bestimmt wird. Die Bestimmung der Abbildungsvorschriften $T_2$, $T_3$, $T_4...T_n$ kann dabei schrittweise erfolgen, indem zunächst die Abbildungsvorschrift $T_2$ bestimmt wird, wobei nach jeder Variation das Ähnlichkeitsmaß M aus allen Bildern $I_1'$-$I_4'$ bestimmt wird, um zu prüfen, ob die Abbildungsvorschrift ausreichend gut ist. Dies kann so lange erfolgen, bis für die Abbildungsvorschrift $T_2$ ein Optimum gefunden ist. Danach kann in nächsten Schritten jeweils die Abbildungsvorschrift $T_3$ und danach $T_4$ bestimmt werden, jeweils unter Verwendung desselben Ähnlichkeitsmaßes M aus allen Bildern. Alternativ können auch mehrere oder alle Abbildungsvorschriften gleichzeitig variiert und danach das Ähnlichkeitsmaß bestimmt werden, wobei dies wechselweise so lange erfolgt, bis ein Optimum für das Ähnlichkeitsmaß M gefunden ist.

Mathematisch ausgedrückt kann das Ähnlichkeitsmaß beispielsweise als grauwertbasierte Varianz eines Voxels - betrachtet als Funktion der Zeit - integriert über das gesamte Bildvolumen mit nachfolgender Formel berechnet werden:

$$V(I_1,...,I_n) = \frac{1}{n1_x1_y1_z} \sum_{i=1}^{1_x} \sum_{j=1}^{1_y} \sum_{k=1}^{1_z} W_{ijk} \sum_{t=1}^{n} (I_t(i,j,k) - \overline{I_t}(i,j,k))^2.$$

Dabei bedeuten $I_1,...,I_n$ die Bilder einer Zeitserie und $I_x$, $I_y$, und $I_z$ die Anzahl der Voxel entlang jeder Koordinatenachse. Außerdem gilt:

$$\overline{I_t}(i,j,k) = \frac{1}{n}\sum_{t=1}^{n} I_t(i,j,k),$$

der den durchschnittlichen Grauwert eines Voxels angibt. Außerdem kann ein Faktor $w_{ijk}$ eingeführt werden, um Voxeln an den Bildgrenzen weniger Einfluß zu geben als Voxeln im Zentrum eines Bildes.

Zur Optimierung des Ähnlichkeitsmaßes müssen bei n Bildern n-1 Abbildungsvorschriften bestimmt werden. Werden feste Transformationen mit 3 Rotationsparametern und 3 Translationsparametern angenommen, so beträgt die Gesamtzahl der Parameter insgesamt 6n-6.

Die Schritte zum iterativen Bestimmen der Abbildungsvorschriften sollen im Folgenden an zwei Varianten beispielhaft veranschaulicht werden. In einer ersten Variante werden folgende Schritte durchlaufen:

1. Registrierung der ersten beiden Bilder $I_1$ (=$I_1$') und $I_2$ ergeben die Abbildungsvorschrift $T_2$. Alle anderen Bilder $I_3,...,I_n$ sind in diesem Schritt vernachlässigt. Das Ähnlichkeitsmaß ist dabei gegeben durch

$$V(I_1, I_2) = \frac{1}{2 1_x 1_y 1_z}\sum_{i=1}^{1_x}\sum_{j=1}^{1_y}\sum_{k=1}^{1_z} W_{ijk}\sum_{t=1}^{2}(I_t(i,j,k) - \frac{(I_1(i,j,k) + I_2(i,j,k))}{2})^2$$

Damit ergibt sich $I_2$'.

2. Wenn nach mehreren Schritten inzwischen s Bilder ($I_1$',...$I_s$')registriert wurden, dann wird die Registrierung des Bildes $I_{s+1}$ und die Bestimmung der Abbildungsvorschrift $T_{s+1}$ erreicht durch Optimierung von

$$V(I_1,...,I_{s+1}) = \frac{1}{(s+1)1_x 1_y 1_z}\sum_{i=1}^{1_x}\sum_{j=1}^{1_y}\sum_{k=1}^{1_z} W_{ijk}(\sum_{t=1}^{s}(I_t'(i,j,k) - \overline{I_t}'(i,j,k))^2 +$$
$$(I_{s+1}(i,j,k) - \overline{I_{s+1}}'(i,j,k))^2)$$

wobei gilt:

$$\overline{I_t}'(i,j,k) = \frac{1}{s+1}(\sum_{t=1}^{s} I_t(i,j,k) + I_{s+1}(i,j,k))$$

Damit ergibt sich $I'_{s+1}$.

3. Dieses iterative Verfahren ist nach n-1 Iterationen beendet, wonach $I_1$',...,$I_n$' vorliegen.

Eine zweite Variante sieht vor, alle Bilder $I_1,...,I_n$ gleichzeitig zu optimieren.

Durch das erfindungsgemäße Verfahren wird eine deutliche Verbesserung des Registrierungsergebnisses, also der Abbildungsvorschriften erreicht, verglichen mit dem Registrierungsergebnis bei den bekannten Verfahren.

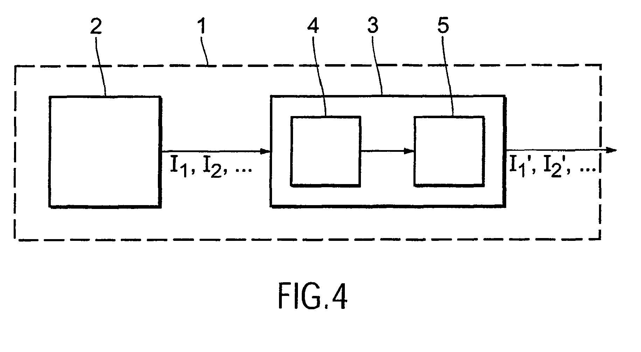

Eine Vorrichtung zur zeitlich nacheinander erfolgenden Erfassung einer Serie von Bilddaten, insbesondere mit medizinischen Bildern eines Untersuchungsbereichs eines Patienten, ist in Figur 4 gezeigt. Diese Vorrichtung 1, die beispielsweise ein Kernspintomograph sein kann, weist einen Detektor 2 zur Erfassung der Bilddaten $I_1$, $I_2$, ... auf, die an die Vorrichtung zur Registrierung 3 weitergegeben werden. Diese weist einerseits eine Speichereinheit 4 zur Speicherung der Bilddaten und eine Recheneinheit 5 zur Berechnung der Abbildungsvorschriften und des Ähnlichkeitsmaßes auf. Die registrierten Bilder $I_1$', $I_2$',... werden von dieser Vorrichtung 3 an eine weitere Bildauswerteeinheit, die hier nicht gezeigt ist, weitergeleitet.

Die Erfindung ist nicht auf die gezeigten Ausführungsbeispiele und nicht auf die beschriebene Verwendung bei medizinischen Bilddaten begrenzt. Die Erfindung kann zur Registrierung beliebiger zeitlich nacheinander erfolgter Bilder desselben Objekts verwendet werden, bei denen eine hohe Registrierungsgenauigkeit erreicht werden soll, um insbesondere Bewegungen des Objekts oder der Bildaufnahmevorrichtung während der Bildaufnahme auszugleichen. Denkbar ist beispielsweise, die Erfindung auch zur Bewegungskorrektur von digitalen Videoaufzeichnungen zu benutzen.

Das erfindungsgemäße Verfahren kann durch ein geeignetes Computerprogramm realisiert sein, das auf einem Bildverarbeitungsrechner abläuft. Dieses Computerprogramm kann auch in der Vorrichtung zur Bilddatenerfassung enthalten sein und eine entsprechende Vorrichtung zur Registrierung steuern.

**Patentansprüche**

1. Verfahren zur Registrierung einer Serie von mindestens drei zeitlich nacheinander erfassten Bildern eines Objekts, wobei einzelne zu registrierende Bilder mittels einer individuellen Abbildungsvorschrift in registrierte Bilder transformiert werden, wobei zur Bestimmung der Abbildungsvorschrift ein Ähnlichkeitsmaß verwendet wird,
   **dadurch gekennzeichnet,**
   **dass** die Abbildungsvorschriften der zu registrierenden Bilder alle mittels desselben, gemeinsamen Ähnlichkeitsmaßes, das aus allen Bildern gewonnen wird, bestimmt werden.

2. Verfahren nach Anspruch 1,
   **dadurch gekennzeichnet,**
   **dass** die Bestimmung der Abbildungsvorschriften iterativ **dadurch** erfolgt, dass abwechselnd eine oder mehrere Abbildungsvorschriften variiert werden und dass mit diesen variierten Abbildungsvorschriften das Ähnlichkeitsmaß aller Bilder bestimmt wird, bis ein vorgegebener Grenzwert oder ein Extremwert für das Ähnlichkeitsmaß erreicht wird.

3. Verfahren nach Anspruch 1,
   **dadurch gekennzeichnet,**
   **dass** die Bestimmung der Abbildungsvorschriften für die einzelnen zu registrierenden Bilder schrittweise erfolgt, indem abwechselnd in einem Verfahrensschritt immer nur eine einzige Abbildungsvorschrift variiert und damit das Ähnlichkeitsmaß bestimmt wird, bis ein Optimum gefunden wird, und dass in nachfolgenden Verfahrensschritten jeweils eine weitere optimale Abbildungsvorschrift bestimmt wird.

4. Verfahren nach Anspruch 1,
   **dadurch gekennzeichnet,**
   **dass** zur Registrierung charakteristische Strukturen oder charakteristische Bildwerte in den Bildern verwendet werden.

5. Verfahren nach Anspruch 1,
   **dadurch gekennzeichnet,**
   **dass** durch die Abbildungsvorschriften beliebige geometrische Veränderungen des Objekts, insbesondere Translationen, Rotationen, Stauchungen und Dehnungen, ausgeglichen werden.

6. Verfahren nach Anspruch 1,
   **dadurch gekennzeichnet,**
   **dass** das Verfahren zur Registrierung einer Serie medizinischer Bilder eines Untersuchungsobjekts, insbesondere einer Serie von zwei- oder dreidimensionalen mittels einer medizinischen Bildgebungsmodalität erstellten Bildern, verwendet wird.

7. Verfahren nach Anspruch 1,
   **dadurch gekennzeichnet,**
   **dass** das Verfahren zur Registrierung einer Serie von mittels der funktionalen Magnetresonanztomographie erstellten Bildern, insbesondere des Gehirns, verwendet wird.

8. Vorrichtung zur Registrierung einer Serie von mindestens drei zeitlich nacheinander erfassten Bildern eines Objekts mit einer Speichereinheit zur Speicherung von Bildern und mit einer Recheneinheit zur Bestimmung individueller Abbildungsvorschriften zur Transformation einzelner zu registrierender Bilder in registrierte Bilder, wobei zur Bestimmung der Abbildungsvorschriften ein Ähnlichkeitsmaß verwendet wird,
   **dadurch gekennzeichnet,**
   **dass** die Recheneinheit derart ausgestaltet ist, dass die Abbildungsvorschriften der zu registrierenden Bilder alle mittels desselben, gemeinsamen Ähnlichkeitsmaßes, das aus allen Bildern gewonnen wird, bestimmt werden.

**9.** Vorrichtung zur zeitlich nacheinander erfolgenden Erfassung einer Serie medizinischer Bilddaten eines Untersuchungsbereichs eines Untersuchungsobjekts mit einer Vorrichtung zur Registrierung gemäß Anspruch 8.

**10.** Computerprogramm das bei Ausführung einem Computer sämtliche Schritte des Verfahrens nach Anspruch 1 durchführen läßt.

**Claims**

**1.** A method for the registration of a series of at least three temporally successively acquired images of an object, where individual images to be registered are transformed into registered images by means of an individual mapping rule, and where a similarity measure is used to determine the mapping rule, **characterized in that** the mapping rules of the images to be registered are all determined by means of the same common similarity measure that is derived from all images.

**2.** A method as claimed in claim 1, **characterized in that** the mapping rules are determined iteratively **in that** alternately one or more mapping rules are varied and **in that** the similarity measure of all images is determined by means of said varied mapping rules until a given limit value or an extreme value is reached for the similarity measure.

**3.** A method as claimed in claim 1, **characterized in that** the mapping rules for the individual images to be registered are determined in steps **in that** alternately in one step of the procedure each time only a single mapping rule is varied and the similarity measure is determined thereby until an optimum is found, and **in that** in subsequent steps of the procedure each time a further optimum mapping rule is determined.

**4.** A method as claimed in claim 1, **characterized in that** characteristic structures or characteristic image values in the images are used for the registration.

**5.** A method as claimed in claim 1, **characterized in that** the mapping rules compensate for arbitrary geometrical variations of the object, notably translations, rotations, compressions and expansions.

**6.** A method as claimed in claim 1, **characterized in that** the method is used for the registration of a series of medical images of an object to be examined, notably a series of two-dimensional or three-dimensional images acquired by means of a medical imaging modality.

**7.** A method as claimed in claim 1, **characterized in that** the method is used for the registration of a series of images, notably images of the brain, that have been acquired by means of functional magnetic resonance tomography.

**8.** A device for the registration of a series of at least three temporally successively acquired images of an object, which device includes a storage unit for storing images and an arithmetic unit for determining individual mapping rules for the transformation of individual images to be registered in registered images, a similarity measure being used for the determination of the mapping rules, **characterized in that** the arithmetic unit is arranged in such a manner that the mapping rules for the images to be registered are all determined by means of the same common similarity measure that is derived from all images.

**9.** A device for the temporally successive acquisition of a series of medical image data of an examination zone of an object to be examined, which device includes a registration device as disclosed in claim 8.

**10.** A computer program which allows a computer to execute all the steps of the method as claimed in claim 1.

**Revendications**

**1.** Procédé de recalage d'une série d'au moins trois images d'un objet, saisies successivement dans le temps, dans lequel des images individuelles à recaler sont transformées à l'aide d'une prescription de représentation en données recalées, une mesure de similitude étant utilisée pour la détermination de la prescription de représentation, **caractérisé en ce que**
les prescriptions de représentation des images à recaler sont toutes déterminées à l'aide de la mesure de similitude commune qui est obtenue à partir de toutes les images.

**2.** Procédé selon la revendication 1,
**caractérisé en ce que**
la détermination des prescriptions de représentation est effectuée de manière itérative par le fait qu'en alternance, une ou plusieurs prescriptions de représentation sont modifiées et que la mesure de similitude de toutes les images est déterminée avec ces prescriptions de représentation modifiées jusqu'à ce qu'une valeur limite ou une valeur extrême soit atteinte pour la mesure de similitude.

**3.** Procédé selon la revendication 1,
**caractérisé en ce que**
la détermination des prescriptions de représentation pour les données individuelles à recaler est effectuée progressivement en ne faisant varier en alternance qu'une seule prescription de représentation dans une étape de procédé et en déterminant ainsi la mesure de similitude jusqu'à ce qu'un optimum soit trouvé et que, dans les étapes suivantes du procédé, une autre prescription de représentation optimale soit respectivement déterminée.

**4.** Procédé selon la revendication 1,
**caractérisé en ce que**
pour l'enregistrement, des structures caractéristiques ou valeurs d'image caractéristiques sont utilisées dans les images.

**5.** Procédé selon la revendication 1,
**caractérisé en ce que**
de quelconques modifications géographiques de l'objet, en particulier des translations, des rotations, des compressions et des extensions sont compensées par les prescriptions de représentation.

**6.** Procédé selon la revendication 1,
**caractérisé en ce que**
le procédé est utilisé pour le recalage d'une série d'images médicales d'un objet d'examen, en particulier d'une série d'images bidimensionnelles ou tridimensionnelles établies à l'aide d'une modalité d'imagerie médical.

**7.** Procédé selon la revendication 1,
**caractérisé en ce que**
le procédé est utilisé pour le recalage d'une série d'images établies à l'aide d'une résonance magnétique nucléaire, en particulier du cerveau.

**8.** Dispositif de recalage d'une série d'au moins trois images d'un objet, saisies successivement dans le temps, avec une unité de mémoire pour l'enregistrement d'images et avec une unité de calcul pour la détermination de prescriptions de représentation individuelles en vue de la transformation d'images individuelles à recaler en images recalées, une mesure de similitude étant utilisée pour la détermination de la prescription de représentation,
**caractérisé en ce que**
l'unité de calcul est conçue de telle sorte que les prescriptions de représentation des images à recaler sont toutes déterminées à l'aide de la mesure de similitude commune qui est obtenue à partir de toutes les images.

**9.** Dispositif de saisie, effectuée successivement dans le temps, d'une série de données d'image médicales d'une zone d'examen d'un objet d'examen avec un dispositif de recalage selon la revendication 8.

**10.** Programme informatique qui peut être effectué en cas d'exécution par un ordinateur de toutes les étapes du procédé selon la revendication 1.

FIG.1

FIG.2

FIG.3

FIG.4